# EUROPÄISCHE PATENTSCHRIFT

(11) **EP 4 619 255 B1**
(45) Veröffentlichungstag und Bekanntmachung des Hinweises auf die Patenterteilung: **29.04.2026**
(21) Anmeldenummer: 23806226.9
(22) Anmeldetag: 14.11.2023
(51) Int. Cl.: B60C 29/06, B60B 7/00, F16K 15/14, B60C 23/04, B60C 23/00

(54) **ENTLÜFTUNGSSYSTEM, RADKAPPE UND VERWENDUNG EINER RADKAPPE IN EINEM NUTZFAHRZEUG**
VENTILATION SYSTEM, WHEEL CAP AND USE OF A WHEEL CAP IN A UTILITY VEHICLE
SYSTÈME DE VENTILATION, ENJOLIVEUR ET UTILISATION D'UN ENJOLIVEUR DANS UN VÉHICULE UTILITAIRE

(30) Priorität: 14.11.2022 DE 102022130085
(43) Veröffentlichungstag der Anmeldung: 24.09.2025
(73) Patentinhaber: SAF-HOLLAND GmbH, 63856 Bessenbach (DE)
(72) Erfinder: ARPACI, Muhammet, 63743 Aschaffenburg (DE)
(74) Vertreter: Müller Schupfner & Partner Patent- und Rechtsanwaltspartnerschaft mbB (Muc)
(86) Internationale Anmeldenummer: PCT/EP2023/081679
(87) Internationale Veröffentlichungsnummer: WO 2024/104993

(56) Entgegenhaltungen:
- EP-A1- 0 529 491
- WO-A2-2010/037073
- CN-A- 101 479 120
- US-A- 4 445 527
- US-A- 5 954 081
- US-A1- 2007 169 818
- US-A1- 2010 147 387

## Beschreibung

Die Erfindung betrifft ein Entlüftungssystem, eine Radkappe und eine Verwendung einer Radkappe in einem Nutzfahrzeug.

Druckluftsysteme sind im Stand der Technik bekannt. Insbesondere auch Reifenbefüllungssysteme bei Nutzfahrzeugen, welche dazu dienen, dass der Reifen - auch z.B. während der Fahrt - mit Druckluft befüllt werden kann. Problematisch bei diesen Systemen ist jedoch, dass diese bei einem Überdruck entlüftet werden müssen, was gerade auch bei Nutzfahrzeugen häufig vorkommt. Bei der Entlüftung können jedoch Dreck und Feuchtigkeit leicht in das Druckluftsystem gelangen und gleichzeitig kann eine erhebliche Schallbelastung der Umwelt erfolgen. Die Verhinderung dieser beiden negativen Effekte wird dabei häufig durch unterschiedlichste Mittel erreicht, sodass ein großes Bauraumvolumen benötigt wird.

Die US 2007/169818 A1 beschreibt eine Druckentlastungsvorrichtung für einen aufblasbaren Reifen, die einen Körper mit einer Kammer mit einem im Körper angeordneten Aufblasventil umfasst.

Die US 2010/147387 A1 umfasst ein Ventil zur Verwendung in einem zentralen Reifenfüllsystem, das ein an der Felge eines Fahrzeugs befestigbares Gehäuse umfasst, das mit dem Reifen in Verbindung steht und einen Hauptkörper beherbergt, der mit einer Druckfluidversorgung des zentralen Reifenfüllsystems verbunden werden kann, sowie ein Ventilelement, das innerhalb des Hauptkörpers beweglich ist, um den Luftstrom durch das Ventil zu steuern.

Die EP 0 529 491 A1 umfasst eine Radbaugruppe für einen schlauchlosen Luftreifen. Die Radbaugruppe weist eine Felge zur Aufnahme des Reifens, einen abnehmbar an der Felge befestigten Flansch und mehrere beabstandete Mittel zum Befestigen des Flansches an der Felge und zum Entlasten des montierten und aufgepumpten Reifens im Falle, dass sich der Flansch von der Felge löst, auf.

Die US 5 954 081 A umfasst ein Aufblasventil mit Überdruckschutz, das über einen Aufblaskern verfügt, der koaxial zu einer Auslassöffnung ist, die beide koaxial zu einem Auslassverteiler sind, der in einem Körperabschnitt des Aufblasventils gehalten wird.

US 4 445 527 A beinhaltet eine Reifenventilverlängerung, die ein Überdruckventilelement zur Begrenzung des Reifendrucks umfasst.

Die CN 101 479 120 B umfasst eine Druckentlastungsvorrichtung für einen aufblasbaren Reifen, der einen Körper mit einer darin befindlichen Kammer und einem Druckentlastungsmechanismus zum Ablassen von Luft umfasst, wenn der Luftdruck in der Kammer einen ersten vorbestimmten Druckpegel überschreitet.

Die WO 2010/037073 A2 beschreibt ein Ventil zur Verwendung in einem zentralen Reifenfüllsystem, das einen Gehäuseabschnitt umfasst.

Es ist daher die Aufgabe der Erfindung, eine sichere Entlüftung zu erreichen, die Verschmutzungen aus dem Druckluftsystem fernhalten kann und gleichzeitig nur einen geringen Bauraumbedarf aufweist und darüber hinaus auch eine Schallbelastung der Umwelt reduziert.

Diese Aufgabe wird mit einem Entlüftungssystem gemäß dem Anspruch 1, mit einer Radkappe gemäß Anspruch 9 und mit einer Verwendung eines Entlüftungssystems oder einer Radkappe gemäß Anspruch 10 gelöst. Weitere Vorteile, Ausführungsformen und Merkmale ergeben sich aus den Unteransprüchen, der Beschreibung sowie aus den Figuren.

Erfindungsgemäß ist ein Entlüftungssystem. Vorteilhafterweise umfasst das Entlüftungssystem einen Grundkörper und einen Dichtring oder eine Vielzahl von Dichtringen, , wobei der Grundkörper eine Montagesektion und eine Dichtsektion aufweisen kann, wobei der Grundkörper, die Montagesektion und/oder die Dichtsektion sich in eine Längsrichtung erstrecken kann/können, wobei der Grundkörper einen Fluidkanal aufweist, welcher sich von der Montagesektion in die Dichtsektion erstreckt, wobei der Dichtring oder die Dichtringe in der Dichtsektion jeweils in einer umlaufenden Nut gehalten ist und/oder sind, wobei die Nut oder die Nuten, insbesondere über Durchbrüche, mit dem Fluidkanal in Fluidverbindung stehen oder bringbar sind, wobei innerhalb des Fluidkanals ein Schalldämmelement angeordnet ist oder sein kann. Das Entlüftungssystem dient dabei dazu, zwischen einem Druckluftsystem und der Umgebung eine fluidwirksame Verbindung bereitzustellen. Eine fluidwirksame Verbindung bzw. eine Fluidverbindung im Sinne der Erfindung bedeutet insbesondere, dass ein Fluid von einem Bereich in den anderen Bereich strömen kann, welche jeweils in Fluidverbindung zueinander stehen. Das Entlüftungssystem kann insbesondere Teil eines Nutzfahrzeugs sein und ein Druckluftsystem des Nutzfahrzeugs, insbesondere ein Druckluftsystem eines Reifenbefüllungssystems des Nutzfahrzeugs, fluidverbindend mit der Umgebung verbinden. Das Entlüftungssystem kann daher insbesondere auch Teil eines Reifenbefüllsystems eines Fahrzeugs, insbesondere eines Nutzfahrzeugs, sein. Ein Nutzfahrzeug im Sinne der Erfindung ist insbesondere ein Fahrzeug mit einer zusätzlichen Gesamtmasse von mehr als 3,5 t, bevorzugt von mehr als 7,5 t und besonders bevorzugt von mehr als 15 t. Alternativ oder zusätzlich bevorzugt kann das Nutzfahrzeug insbesondere ein straßentaugliches oder straßengebundenes Nutzfahrzeug sein. Besonders bevorzugt ist das Nutzfahrzeug ein Nutzfahrzeuganhänger, insbesondere ein Sattelauflieger. Das Entlüftungssystem verfügt über einen Grundkörper, wobei dieser Grundkörper insbesondere einstückig ausgebildet sein kann, um so eine besonders hohe mechanische Festigkeit zu erreichen. Der Grundkörper ist insbesondere das Hauptelement des Entlüftungssystems. Der Grundkörper erstreckt sich entlang einer Längsrichtung. Alternativ bevorzugt kann sich auch nur die Montagesektion in Längsrichtung erstrecken oder die Dichtsektion. Bevorzugt ist es jedoch, wenn sich sowohl die Dichtsektion als auch die Montagesektion in Längsrichtung erstrecken. Hierdurch kann eine einfache Fertigung erreicht werden. Die Längsrichtung ist insbesondere diejenige Richtung, in welcher der Grundkörper, die Montagesektion, die Dichtsektion und/oder das Entlüftungssystem seine größte Hauptabmessung aufweist/aufweisen. Zweckmäßigerweise erstreckt sich die Längsrichtung durch den Schwerpunkt des Grundkörpers und/oder bildet eine Zentralachse des Grundkörpers oder der Montagesektion aus. Der Grundkörper selber verfügt zumindest über eine Montagesektion und eine Dichtsektion. Die Montagesektion des Grundkörpers dient dazu, den Grundkörper an einem weiteren Element oder Bestandteil festzulegen. Alternativ bevorzugt kann die Montagesektion auch ein stoffschlüssiges Fügeelement sein und/oder einstückig mit einem weiteren Element ausgebildet sein, insbesondere eine Naben- oder Radkappe. In anderen Worten kann daher der Grundkörper über die Montagesektion mit einem weiteren Element oder Bestandteil verbunden sein. Beispielsweise kann daher der Grundkörper einstückig mit einer Nabenkappe bzw. Radkappe ausgebildet sein. Die Erfindung kann daher insbesondere auch ein Nabenkappensystem betreffen bzw. ein Radkappensystem betreffen, wobei die Nabenkappe insbesondere einstückig mit dem Grundkörper ausgebildet sein kann. Alternativ oder zusätzlich bevorzugt kann die Montagesektion grundlegend auch reversible Befestigungsmittel aufweisen, insbesondere ein Gewinde. Dieses Gewinde kann als Innengewinde oder als Außengewinde ausgebildet sein. Der Grundkörper kann aus Kunststoff oder Metall ausgebildet sein. Der Vorteil von Kunststoff ist vornehmlich die Korrosionsbeständigkeit und/oder dessen Kostengünstigkeit. Der Vorteil von Metall, insbesondere Aluminium, Messing oder Stahl, liegt vornehmlich in dessen Festigkeit. Neben der Montagesektion verfügt der Grundkörper des Entlüftungssystems auch über eine Dichtsektion. Diese Dichtsektion dient dazu, den Anordnungsbereich für die Dichtringe oder den Dichtring bereitzustellen. Um eine sichere Lagesicherung des Dichtrings oder der Dichtringe erreichen zu können, ist jeweils für einen Dichtring eine umlaufende Nut in der Dichtsektion vorgesehen. Vorteilhafterweise erstreckt sich diese umlaufende Nut in einer Ebene, welche senkrecht zur Längsrichtung steht. Insbesondere ist dabei die Längsrichtung senkrecht zu einer Radialrichtung ausgebildet, wobei die Längsrichtung, die Radialrichtung und eine Umlaufrichtung insbesondere ein Zylinderkoordinatensystem miteinander ausbilden können. Die umlaufenden Nuten sind insbesondere in Radialrichtung zur Längsrichtung hin in den Grundkörper, daher insbesondere von außen in den Grundkörper, eingebracht. Zusätzlich verfügt der Grundkörper auch über einen Fluidkanal, welcher die Montagesektion fluidtechnisch mit der Dichtsektion verbinden kann. Der Fluidkanal weist insbesondere in der Montagesektion einen Fluidausgang auf, sodass ein Fluid in die Montagesektion über den Fluidkanal bis in die Dichtsektion strömen kann. Der Fluidkanal ist insbesondere um die Längsrichtung ausgebildet. Der Fluidkanal ist vorzugsweise rotationssymmetrisch um die Längsrichtung ausgebildet. Alternativ bevorzugt kann der Fluidkanal auch mehreckig ausgebildet sein. Dies kann besonders bevorzugt dann der Fall sein, wenn der Grundkörper aus Kunststoff ist. Die eckige Ausgestaltung kann insbesondere für eine formschlüssige Lagesicherung, insbesondere gegen Rotation, des Schalldämmelements genutzt werden. Vorteilhafterweise korrespondiert die äußere Kontur des Schalldämmelements mit der Kontur des Fluidkanals miteinander. Alternativ oder zusätzlich bevorzugt bilden das Schalldämmelement, insbesondere mit seiner äußeren Kontur, und der Fluidkanals eine eine Passung, insbesondere eine Übermaßpassung, miteinander aus. Zweckmäßigerweise weist der Fluidkanal ein distales Ende, insbesondere in Längsrichtung, in der Dichtsektion des Grundkörpers auf. Um einen Fluidfluss von dem Fluidkanal in die Nuten vorsehen zu können, können Durchbrüche vorgesehen sein, welche eine Fluidverbindung zwischen dem Fluidkanal und den Nuten erreichen können. Grundlegend können jedoch auch Bohrungen oder andere Fluidverbindungsmittel vorgesehen sein, welche eine Fluidverbindung zwischen dem Fluidkanal und den Nuten erreichen können. Durch diese Fluidverbindung ist es daher möglich, bei einem Überdruck im Fluidkanal die in den Nuten oder der Nut angeordneten Dichtringe oder den Dichtering zu verlagern, sodass ein Strömungsfluss eines Fluids in die Umgebung seitlich an dem Dichtring vorbei möglich ist. Daher kann hierdurch eine Entlüftung erreicht werden, wobei jedoch zeitgleich durch die Dichtringe ein Eindringen von Schmutz und/oder Feuchtigkeit in das Entlüftungssystem verhindert wird, insbesondere wenn kein ausreichender Druck vorhanden ist, um die Dichtringe zu verlagern. Neben dem Grundkörper und den Dichtringen verfügt das Entlüftungssystem bevorzugt auch über ein Schalldämmelement. Dieses Schalldämmelement ist zumindest abschnittsweise, bevorzugt vollständig, innerhalb des Fluidkanals angeordnet. Durch diese Anordnung innerhalb des Fluidkanals kann erreicht werden, dass geräuscherzeugende Druckstöße durch das Schalldämmelement reduziert und/oder verhindert werden. Vorteilhafterweise ist das Schalldämmelement dabei fluiddurchgängig. In anderen Worten kann durch das Schalldämmelement ein fluidfluss stattfinden. Beispielsweise kann dies durch einen offenporigen Schaum erreicht werden. Durch die Anordnung des Schalldämmelements innerhalb des Fluidkanals des Grundkörpers des Entlüftungssystems kann eine besonders kompakte und bauraumsparende Anordnung erreicht werden. Des Weiteren kann hierdurch auch eine Beschädigung des Schalldämmelements verhindert werden, sodass die Erfindung in der Lage ist, eine kompakte und sichere Schallreduktion bei einer Entlüftung eines Druckluftsystems bereitstellen zu können. Grundlegend kann die Erfindung jedoch auch ohne das Schalldämmelement ausgeführt sein. Sollte kein Schalldämmelement vorhanden sein, so kann insbesondere eine kompakte und/oder eine besonders gut geschützte Entlüftungsmöglichkeit bereitgestellt werden.

Vorteilhafterweise weisen zumindest eine Nut oder die Nuten, insbesondere der überwiegende Teil oder sämtliche Nuten, eine gerundete Seitenwand oder einen gerundeten Nutgrund auf. Hierdurch kann eine besonders kerbwirkungsarme Ausgestaltung erreicht werden. Alternativ oder zusätzlich bevorzugt kann eine Nut, bevorzugt der überwiegende Teil der Nuten und besonders bevorzugt alle Nuten, V-förmig ausgebildet sein. In anderen Worten können die Seitenwände der Nut geradlinig und/oder schräg zueinander verlaufend sein. Insbesondere kann hierdurch eine besonders gute Zentrierwirkung der Dichtringe bzw. des Dichtrings in der jeweiligen V-förmigen Nut erreicht werden. Alternativ oder zusätzlich bevorzugt kann auch die Seitenwand und/oder der Nutgrund einer Nut, bevorzugt der überwiegenden Anzahl der Nuten und besonders bevorzugt aller Nuten, eckig ausgebildet sein. Hierdurch kann eine besonders einfache Fertigung erreicht werden. Insbesondere können dabei einige der Nuten gerundete Seitenwände oder/und einen gerundeten Nutgrund aufweisen, wobei gleichzeitig andere Nuten V-förmig und/oder eckig ausgebildet sein können. Insbesondere kann durch eine unterschiedliche Ausgestaltung der Nut, beispielsweise bei einigen V-förmigen Nuten und einigen eckigen Nuten und/oder einigen gerundeten Nuten jeweils die Nut an ein entsprechendes Druckniveau zur Entlüftung angepasst werden. Daher kann hierdurch beispielsweise die Entlüftung bzw. die entlüftbare Fluidmenge stufenweise je nach vorliegendem Druckniveau erfolgen.

Zweckmäßigerweise weist die Montagesektion ein Gewinde, insbesondere ein selbstdichtes Gewinde, auf, wobei das Gewinde um und/oder entlang der Längsrichtung angeordnet sein kann. Durch die Vorsehung eines Gewindes in der Montagesektion, welches auch als Montagegewinde bezeichnet werden kann, kann eine besonders einfache und effektive reversible Festlegung des Grundkörpers an einem weiteren Element erreicht werden. Dieses Gewinde kann insbesondere als ein Außengewinde und/oder als ein Innengewinde ausgebildet sein. Zweckmäßigerweise bildet das Gewinde ein distales Ende in Längsrichtung des Grundkörpers aus. Hierdurch kann eine besonders einfache Montagemöglichkeit erreicht werden. Um einen Fluidfluss in die Umgebung effektiv zu verhindern sollte das Gewinde als selbstdichtendes Gewinde ausgebildet sein. Vorteilhafterweise kann das Gewinde insbesondere den Fluidkanal umgeben und/oder, insbesondere bei einem Innengewinde, einen Teil des Fluidkanals ausbilden. Alternativ oder des Weiteren bevorzugt kann das Gewinde insbesondere um die Längsrichtung ausgebildet sein. In anderen Worten kann daher die Mittelachse des Gewindes auf der Längsrichtung liegen.

Zweckmäßigerweise weist die Dichtsektion einen äußeren zylindrischen oder mehr eckigen Abschnitt auf, wobei in diesem Abschnitt die Nuten, insbesondere in Richtung einer Radialrichtung und/oder in Längsrichtung, eingebracht sind. Die Radialrichtung ist bevorzugt, wie bereits beschrieben, senkrecht stehend zur Axialrichtung ausgebildet und ist eine Richtung, welche unabhängig zu weiteren Merkmalen und/oder Eigenschaften der Erfindung existiert. Die Dichtsektion weist in anderen Worten vorteilhafterweise in dem Bereich, in welchem die Nut oder alle Nuten vorgesehen sind/ist eine äußere Erscheinungsform auf, welche zylindrisch und/oder mehreckig, insbesondere sechseckig oder achteckig, ist. Die äußere eckige Erscheinungsform bzw. die zylindrische Form ist insbesondere derart ausgebildet, dass diese Erscheinungsform sich in einem Querschnitt befindet, welcher durch eine Schnittebene ausgebildet ist, dessen Normale parallel zur Längsrichtung ist. Durch die zylindrische Ausgestaltung der Dichtsektion kann eine besonders verletzungsarme Ausgestaltung erreicht werden, wobei zusätzlich hierbei die Fertigungskosten besonders gering sind. Sollte jedoch eine mehreckige Ausgestaltung der Dichtsektion vorliegen, so kann hierdurch eine besonders einfache Montage, insbesondere unter der Ausnutzung der eckigen Ausgestaltung als Werkzeugangriffsfläche, erreicht werden.

Vorteilhafterweise bildet die Montagesektion und/oder die Dichtsektion jeweils ein ditales Ende des Grundkörpers in Längsrichtung aus. In anderen Worten kann ein distales Ende oder beide distalen Enden, insbesondere die gegenüberliegenden distalen Enden, des Grundkörpers in Längsrichtung durch die Montagesektion bzw. durch die Dichtsektion ausgebildet sein. Hierdurch kann eine besonders einfache Montage und/oder eine besonders vorteilhafte Abströmung eines zu entlüftenden Fluids, insbesondere Druckluft, erreicht werden.

Zweckmäßigerweise ist und/oder sind der Dichtring und/oder die Dichtringe ein O-Ring. In anderen Worten können die Dichtringe O-Ringe sein. Hierdurch kann eine besonders einfache und kostengünstige Ausgestaltung erreicht werden.

Vorteilhafterweise liegt das Verhältnis aus dem Innendurchmesser des Dichtrings zu dem Durchmesser des Fluidkanals in einem Bereich von 0,05 bis 1,5, bevorzugt in einem Bereich von 0,2 bis 1, und besonders bevorzugt in einem Bereich von 0,3 bis 0,5. Alternativ bevorzugt kann das Verhältnis auch in den Bereichen 0,05 bis 0,95 oder 0,5 bis 0,8 oder 0,6 bis 0,7 liegen. Der Innendurchmesser des Dichtrings ist insbesondere derjenige Durchmesser eines Zylinders oder einer Kugel, welche/r gerade noch durch den Dichtring, insbesondere ohne eine Verformung des Dichtrings, geführt werden kann. Der Durchmesser des Fluidkanals ist insbesondere der maximale, der minimale oder der über die Länge des Fluidkanals gemittelte Durchmesser in einer Schnittebene senkrecht zur Längsrichtung. Bei einem Verhältnis im Bereich von 0,05 bis 1,5 kann eine besonders gute Schalldämmung erreicht werden. Sollte hingegen das Verhältnis in einem Bereich von 0,2 bis 1 liegen, so kann hierdurch eine besonders einfache Montage der Dichtringe erfolgen. Sollte darüber hinaus das Verhältnis in einem Bereich von 0,3 bis 0,5 liegen, so hat die Anmelderin überraschend herausgefunden, dass in diesem Bereich eine besonders einfache und effektive Entlüftung erfolgen kann, insbesondere da Schwingungen der Dichtringe während des Entlüftens reduziert oder gar verhindert werden können.

Vorteilhafterweise ist das Schalldämmelement aus einem Schaumstoff ausgebildet und/oder enthält Schaumstoffbestandteile. Durch die Ausbildung des Schalldämmelements mit und/oder zumindest teilweise durch Schaumstoffelemente kann eine besonders leichte und schalldämmungseffektive Ausgestaltung des Schalldämmelements erreicht werden. Vorteilhafterweise kann der Schaumstoff dabei ein offenporiger Schaumstoff sein.

Vorteilhafterweise ist das Schalldämmelement über eine kraftschlüssige Verbindung, insbesondere über eine Pressverbindung, innerhalb des Fluidkanals gehalten. In anderen Worten kann daher beispielsweise durch eine Übermaßpassung zwischen dem Schalldämmelement und dem Fluidkanal, das Schalldämmelement in dem selbigen gehalten sein. Alternativ oder zusätzlich bevorzugt kann auch eine stoffschlüssige Verbindung zwischen dem Schalldämmelement und dem Fluidkanal vorliegen. Eine derartige stoffschlüssige Verbindung kann beispielsweise durch Kleben erreicht werden. Hierdurch kann eine besonders langlebige Fixierung bzw. Montage des Schalldämmelements erreicht werden. Der Vorteil einer kraftschlüssigen Verbindung, insbesondere einer Klemmverbindung, liegt hingegen in der leichten Demontierbarkeit bzw. Auswechselbarkeit des Schalldämmelements.

Zweckmäßigerweise weist das Schalldämmelement einen hohlen Zentralbereich auf, wobei der Zentralbereich insbesondere über eine Öffnung des Schalldämmelements strömungstechnisch mit dem Fluidkanal verbunden ist. In anderen Worten kann das Schalldämmelement insbesondere einen Schwerpunkt aufweisen, welcher in einem hohlen Bereich desselbigen angeordnet ist. Der Zentralbereich ist insbesondere ein mittig innerhalb des Schalldämmelements vorhandener Bereich. Um eine strömungstechnische Verbindung zwischen diesem Zentralbereich und dem Fluidkanal, insbesondere der Öffnung des Fluidkanals, etablieren zu können, kann das Schalldämmelement selber eine Öffnung des Zentralbereichs aufweisen. Hierdurch kann eine besonders strömungswiderstandsarme Verbindung erreicht werden.

Vorteilhafterweise ist das Schalldämmelement derart angeordnet, dass ein Fluidfluss von dem Fluidkanal in die Nut oder die Nuten durch das Schalldämmelement treten muss. In anderen Worten kann das Schalldämmelement derart im Fluidkanal angeordnet sein, dass jeglicher Fluss, welcher von dem Fluidkanal in die Nuten tritt, durch das Schalldämmelements durchtreten muss. Diese Anordnung ist dabei insbesondere im Hinblick auf eine Schalldämmung besonders vorteilhaft, da jegliches Fluiddurchtreten des Schalldämmelements in Hinblick auf Druckstöße bzw. Geräuschentwicklungen positiv ist.

In einer bevorzugten Ausführungsform ist der hohle Zentralbereich des Schallelements in Längserrichtung, insbesondere gegenüber der Öffnung des Zentralbereichs in Längsrichtung, durch eine Wand begrenzt. Diese Wand kann insbesondere auch aus einem Schaumstoff ausgebildet sein. Hierdurch kann eine besonders vorteilhafte und sichere distale Anschlagsmöglichkeit des Schalldämmelements erreicht werden, sodass hierdurch die Montage vereinfacht werden kann.

Zweckmäßigerweise ist das Schalldämmelement einstückig ausgebildet. Durch die einstückige Ausbildung des Schalldämmelements kann nicht nur eine einfache Montage erreicht werden, sondern auch eine besonders mechanisch belastbare Ausgestaltung des Schalldämmelements.

Vorteilhafterweise weist das Entlüftungssystem ein Abdeckelement, insbesondere eine Abdeckhaube, auf, wobei das Abdeckelement die oder den in der Dichtsektion angeordneten Dichtring oder die Dichtringe, insbesondere radial, abdeckt. In anderen Worten kann dies bedeuten, dass bei einer Projektion der Abdeckhaube auf die Längsrichtung, diese Projektion die Projektion der Dichtringe auf die Längsrichtung umschließt. Daher kann durch die Abdeckhaube bzw. durch das Abdeckelement ein radialer Schutz der Dichtringe bzw. des Dichtrings erreicht werden. Das Abdeckelement ist insbesondere aus einem Kunststoff und/oder einem Metall ausgebildet. Der Vorteil eines Metalls besteht insbesondere in dessen mechanischer Festigkeit. Der Vorteil eines Kunststoffes hingegen liegt in seiner Korrosionsbeständigkeit und/oder in seiner Kostengünstigkeit.

In einer bevorzugten Ausführungsform ist das Abdeckelement, insbesondere reversibel, am Grundkörper, insbesondere mittels eines Gewindes, festgelegt und/oder wobei zwischen Abdeckelement und dem Grundkörper ein Strömungsausgang, insbesondere ein ringförmig um die Längsrichtung ausgebildeter Strömungsausgang, ausgebildet ist. Die reversible Festlegung des Abdeckelements am Grundkörper ermöglicht eine einfache Demontage des Abdeckelements in schneller Weise. Hierdurch kann insbesondere ein Austausch bzw. eine Wartung des Entlüftungssystem bzw. seiner Dichtringe in einfacher Weise erfolgen. Die reversible Festlegung kann in kostengünstiger und mechanisch belastbarer Weise über ein Gewinde erfolgen. Insbesondere kann dieses Gewinde ein Rechtsgewinde sein, welches die Montagemöglichkeit erleichtert. Vorteilhafterweise erstreckt sich das Gewinde in oder parallel zur Längsrichtung, um eine einfache Montagemöglichkeit zu erreichen. Alternativ oder zusätzlich bevorzugt erstreckt sich das Gewinde oder die Längsrichtung senkrecht zu einer Fahrzeuglängsachse und/oder parallel zu einer Breitenrichtung eines Fahrzeugs, insbesondere eines Nutzfahrzeugs, wenn die Entlüftung an dem Fahrzeug befestigt ist. Besonders zweckmäßig ist es, wenn das Gewinde einstückig mit dem Grundkörper ausgebildet ist und/oder den Grundkörper in Längsrichtung berandet bzw. ein distales Ende in Längsrichtung des Grundkörpers ausbildet. Hierdurch kann die Montage weiter vereinfacht werden. Alternativ zu einem Gewinde kann die reversible Befestigung auch über eine Steckverbindung erfolgen.

Bevorzugt erstreckt sich die Dichtsektion quer zur Montagesektion. Unter einem quer ist dabei zu verstehen, dass der Winkel zwischen den Verlaufsrichtungen bzw. der Haupterstreckungsrichtungen der Montagesektion und der Dichtsektion einen kleineren Winkel miteinander einschließen, welcher zwischen 70° und 90°, bevorzugt zwischen 80° und 90° und besonders bevorzugt zwischen 85° und 90° liegt und ganz besonders bevorzugt 90° beträgt. Hierdurch kann eine besonders kompakte Ausgestaltung erreicht werden.

Zweckmäßigerweise weist die Dichtsektion zwei Schenkel auf, wobei die Schenkel sich insbesondere quer, vorteilhafterweise senkrecht, zu der Montagesektion erstrecken, wobei jeder der Schenkel zumindest eine Nut mit einem Dichtring aufweist. Hierdurch kann eine besonders gute Entlüftungsmöglichkeit geschaffen werden, welche gerade auch in Längsrichtung sehr kompakt ist und dennoch eine große Fluidmenge entlüften kann. Daher kann eine derartige Ausgestaltung gerade bei einem Einsatz in einem Nutzfahrzeug und/oder bei einer Montage an einer Radkappe sehr positiv sein. Die Schenkel bilden bzw. umgeben vorteilhafterweise jeweils einen Teil des Fluidkanals aus. Die Schenkel können dabei jeweils eine Nut oder eine Vielzahl von Nuten aufweisen, welche, insbesondere über Durchbrüche, mit dem Fluidkanal in Fluidverbindung stehen oder bringbar sind.

Ein weiterer Aspekt der Erfindung kann eine Radkappe betreffen, wobei die Radkappe ein Entlüftungssystem wie vorhergehend und nachfolgend beschrieben umfasst. In anderen Worten kann die Erfindung auch ein Radkappensystem mit einer Radkappe und einem Entlüftungssystem wie vorhergehend und nachfolgend beschrieben betreffen. Insbesondere kann dabei eine stoffschlüssige Festlegung des Grundkörpers an dem Hauptkörper der Radkappe erfolgen. Besonders zweckmäßig ist es, wenn die Radkappe bzw. der Hauptkörper der Radkappe einstückig mit dem Grundkörper ausgebildet ist. In anderen Worten kann der Grundkörper über eine stoffschlüssige Fügung der Montagesektion bzw. einem einteiligen Ausbilden des Grundkörpers mit der Radkappe bzw. dessen Hauptkörpers mit dem Hauptkörper der Radkappe verbunden sein. Hierdurch kann eine besonders mechanische belastbare Ausgestaltung erfolgen. Zweckmäßigerweise ist dabei die Längsrichtung diejenige Richtung, um welche die Radkappe in einer späteren Montagesituation rotiert. In anderen Worten kann die Längsrichtung dabei auch diejenige Richtung sein, um welche das Rad, an welchem die Radkappe montiert werden soll, rotiert. Alternativ bevorzugt kann die Längsrichtung auch, insbesondere in die Radialrichtung, beabstandet von der Rotationsachse bzw. der Zentralachse der Radkappe angeordnet sein. Hierdurch kann eine besonders einfache Montagemöglichkeit kreiert werden. Alternativ zu einer stofflichen Fügung kann auch eine reversible Montage des Entlüftungssystems an dem Grundkörper erfolgen, insbesondere über das Montagegewinde / Gewinde der Montagesektion.

Ein weiterer Aspekt der Erfindung kann eine Verwendung einer Radkappe wie vorhergehend und nachfolgend beschrieben oder eines Entlüftungssystem wie vorhergehend oder nachfolgend beschrieben in einem Nutzfahrzeug, insbesondere zur schallgedämmden Entlüftung, betreffen. In anderen Worten kann die Erfindung den Einsatz eines Entlüftungssystems bzw. einer Radkappe wie vorhergehend und nachfolgend beschrieben in einem Nutzfahrzeug betreffen. Alternativ oder zusätzlich bevorzugt kann die Erfindung auch eine Verwendung einer Radkappe oder eines Entlüftungssystem in einem Reifenbefüllungssystem, insbesondere eines Nutzfahrzeugs, betreffen. Alternativ oder zusätzlich bevorzugt kann das Entlüftungssystem auch in einem Schienenfahrzeug eingesetzt werden.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
Figur 1 einen Schnitt durch ein Entlüftungssystem;
Figur 2 eine Außenansicht eines Grundkörpers mit einer Dichtsektion mit mehreckigem Abschnitt;
Figur 3 ein Entlüftungssystem mit einem Abdeckelement; und
Figur 4 ein Entlüftungssystem mit einer Dichtsektion, die senkrecht zu der Längsrichtung steht.

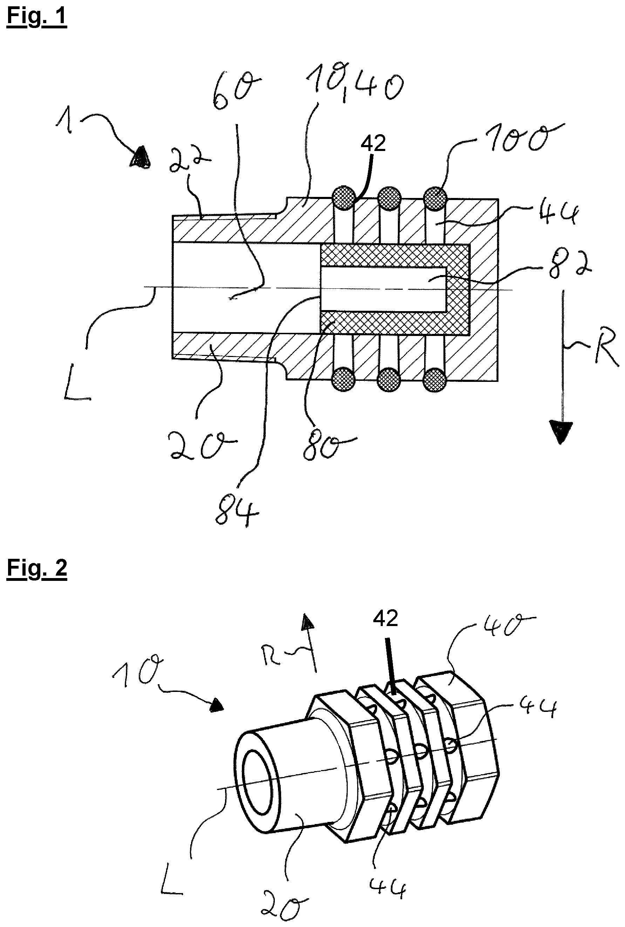

In der **Figur 1** ist ein Entlüftungssystem 1 gezeigt. Das Entlüftungssystem 1 verfügt über einen Grundkörper 10 sowie über drei Dichtringe 100. Das Entlüftungssystem kann jedoch auch mehr als drei Dichtringe aufweist, insbesondere vier, fünf, sechs oder sieben Dichtringe 100. Alternativ bevorzugt kann das Entlüftungssystem auch lediglich zwei oder nur einen Dichtring 100 aufweisen. Die Dichtringe 100 sind dabei O-Ringe, welche reversibel zueinander austauschbar sind. Diese reversible Austauschbarkeit der Dichtringe 100 zueinander ist aber insbesondere ausführungsformunabhängig Gegenstand der Erfindung. Unter einer reversiblen Austauschbarkeit ist insbesondere zu verstehen, dass die Dichtringe 100 baugleich sind und/oder ohne Modifikationen jeweils gegenseitig ausgetauscht werden können. Neben den Dichtringen 100 verfügt das Entlüftungssystem 1 auch über einen Grundkörper 10, welcher eine Montagesektion 20 als auch eine Dichtsektion 40 aufweist. Zentral innerhalb des Grundkörpers 10 ist der Fluidkanal 60 ausgebildet, wobei der Fluidkanal 60 entlang seiner Erstreckung in Längsrichtung L einen konstanten Durchmesser aufweist. Innerhalb des Fluidkanals 60 ist das Schalldämmelement 80 angeordnet, welches einen hohlen Zentralbereich 82 aufweist. Dieser ist über die Öffnung 84 des Schalldämmelements 80 in Fluidverbindung mit dem Fluidkanal 60. Um einen Fluidfluss von dem Fluidkanal 60 durch das Schalldämmelement 80 zu erreichen, sind Durchbrüche 44 vorgesehen, welche jeweils in Nuten 42 enden. Durch diese Durchbrüche 44 stehen daher die Nuten 42 mit dem Fluidkanal 60 in Fluidverbindung. Des Weiteren ist in der Figur 1 eine Ausgestaltung gezeigt, bei der das Schalldämmelement 80 derart angeordnet ist, dass ein Fluidfluss von dem Fluidkanal 60 in die Nuten 42 durch das Schalldämmelement 80 treten muss. Um eine Montage des Grundkörpers 10 zu erreichen, verfügt die Montagesektion 20 über ein Gewinde 22. Das Gewinde 22 und/oder die Montagesektion 20 bilden in der dargestellten Ausführungsform ein distales Ende in Längsrichtung L des Grundkörpers 10 aus. Distal gegenüberliegend in Längsrichtung L bildet die Dichtsektion 40 das distale Ende des Grundkörpers 10 in Längsrichtung L aus. Senkrecht auf der Längsrichtung L steht die Radialrichtung R.

In der **Figur 2** ist einen Grundkörper 10 für ein Entlüftungssystem 1 gezeigt. Der Grundkörper 10 verfügt in dessen Dichtsektion 40 über einen mehreckigen Abschnitt, wobei in diesem Abschnitt die Nuten 42 eingebracht sind. Die Nuten 42 sind in Richtung der Radialrichtung R eingebracht. In dem dargestellten Ausführungsbeispiel ist der mehreckige Abschnitt ein sechseckiger Abschnitt. Die Montagesektion 20 verfügt über ein nicht erkennbares Innengewinde zur reversiblen Montage des Grundstückkörpers 10, insbesondere an einem Hauptkörper einer Radkappe.

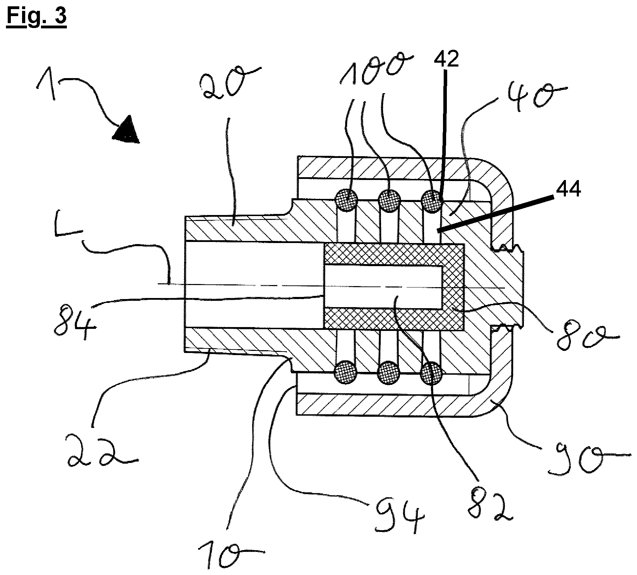

In der **Figur 3** ist eine Ausgestaltung eines Entlüftungssystems 1 gezeigt, wobei das Entlüftungssystem 1 neben dem Grundkörper 10 und den Dichtringen 100 ein Abdeckelement 90 in der Form eine Abdeckhaube aufweist. Das Abdeckelement 90 kann grundlegend an einer Stirnseite, insbesondere einer Stirnseite in Längsrichtung L, des Grundkörpers 10 zur Anlage gebracht werden, wie es auch der Figur 3 entnommen werden kann. In dem dargestellten Ausführungsbeispiels verfügt der Grundkörper 10 über ein männlich ausgebildetes Gewinde, welches über ein Innengewinde des Abdeckelements 90 in kraftschlüssige Verbindung gebracht ist, um so das Abdeckelement 90 an dem Grundkörper 10 festzulegen. Sowohl das männlich als auch das weiblich ausgestaltete Gewinde erstrecken sich in Längsrichtung L und sind um die Längsrichtung L ausgebildet. Zwischen dem Abdeckelement 90 und dem Grundkörper 10 ist ein Strömungsausgang 94 ausgebildet, durch welchen die Nuten 42 bzw. die Durchbrüche 44 und der Fluidkanal 60 mit der Umgebung in Fluidverbindung stehen oder bringbar sein.

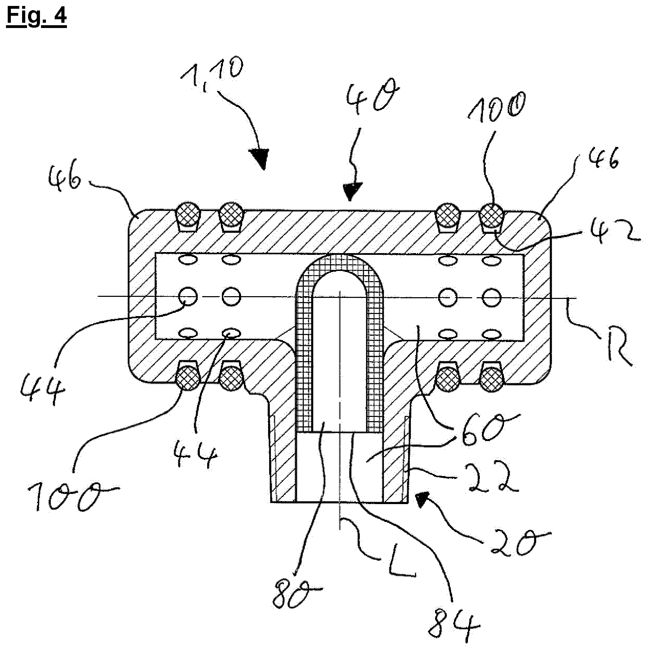

In der **Figur 4** ist eine Ausgestaltung eines Entlüftungssystems 1 gezeigt, wobei das Entlüftungssystem 1 neben dem Grundkörper 10 und den Dichtringen 100 eine Montagesektion 20 als auch eine Dichtsektion 40 aufweist. Zentral innerhalb des Grundkörpers 10 ist der Fluidkanal 60 ausgebildet. Die Montagesektion 20 erstreckt sich dabei in Längsrichtung L und die Dichtsektion 40 mit ihren beiden Schenkeln 46 in Radialrichtung R. Die Schenkel 46 sind stoffschlüssig mit der Montagesektion 20 verbunden. Das Schalldämmelement 80 ist derart innerhalb des Fluidkanals 60 angeordnet, sodass ein Fluidfluss von dem Fluidkanal 60 in die Nuten 42 durch das Schalldämmelement 80 treten muss. Um eine Montage des Grundkörpers 10 zu erreichen, verfügt die Montagesektion 20 über ein Gewinde 22. Das Gewinde 22 und/oder die Montagesektion 20 bilden in der dargestellten Ausführungsform ein distales Ende in Längsrichtung L des Grundkörpers 10 aus. Distal gegenüberliegend in Längsrichtung L bildet die Dichtsektion 40 das distale Ende des Grundkörpers 10 in Längsrichtung L aus. Die Schenkel 46 der Dichtsektion 40 verfügen jeweils über zwei Nuten 42, die über Durchbrüche 44 mit dem Fluidkanal 60 fluidtechnisch verbunden sind. Innerhalb der Nuten 42 sind jeweils die Dichtringe 100 angeordnet. Die Nuten 42 weisen v-förmige Seitenwände auf.

### Bezugszeichenliste:

- 1: - Entlüftungssystem
- 10: - Grundkörper
- 20: - Montagesektion
- 22: - Gewinde in der Montagesektion (20)
- 40: - Dichtsektion
- 42: - Nut
- 44: - Durchbruch
- 46: - Schenkel
- 60: - Fluidkanal
- 80: - Schalldämmelement
- 82: - Zentralbereich
- 84: - Öffnung
- 90: - Abdeckelement
- 94: - Strömungsausgang
- 100: - Dichtring
- L: - Längsrichtung
- R: - Radialrichtung

## Patentansprüche

1. Entlüftungssystem (1) umfassend einen Grundkörper (10) und einen Dichtring (100) oder eine Vielzahl von Dichtringen (100),
wobei der Grundkörper (10) eine Montagesektion (20) und eine Dichtsektion (40) aufweist,
wobei der Grundkörper (10) und/oder die Montagesektion (20) und/oder die Dichtsektion (40) sich in eine Längsrichtung (L) erstreckt,
wobei der Grundkörper (10) einen Fluidkanal (60) aufweist, welcher sich von der Montagesektion (20) in die Dichtsektion (40) erstreckt,
wobei der Dichtring (100) oder die Dichtringe (100) in der Dichtsektion (40) jeweils in einer umlaufenden Nut (42) gehalten ist/sind,
wobei die Nut (42) oder die Nuten (42), insbesondere über Durchbrüche (44), mit dem Fluidkanal (60) in Fluidverbindung stehen oder bringbar sind, **dadurch gekennzeichnet, dass** innerhalb des Fluidkanals (60) ein Schalldämmelement (80) angeordnet ist.

2. Entlüftungssystem (1) gemäß Anspruch 1,
wobei die Nut (42) oder die Nuten (42) eine gerundete Seitenwand oder einen gerundeten Nutgrund aufweisen.

3. Entlüftungssystem (1) gemäß einem der vorhergehenden Ansprüche,
wobei die Montagesektion (20) ein Gewinde (22), insbesondere ein selbstdichtendes Gewinde, aufweist,
wobei das Gewinde um und/oder entlang der Längsrichtung angeordnet ist.

4. Entlüftungssystem (1) gemäß einem der vorhergehenden Ansprüche,
wobei die Dichtsektion (40) einen äußeren zylindrischen oder mehreckigen Abschnitt aufweist,
wobei in diesem Abschnitt die Nuten (42), insbesondere in Richtung einer Radialrichtung (R) und/oder in Längsrichtung, eingebracht sind.

5. Entlüftungssystem (1) gemäß einem der vorhergehenden Ansprüche, wobei das Schalldämmelement (80) aus einem Schaumstoff ausgebildet ist.

6. Entlüftungssystem (1) gemäß einem der vorhergehenden Ansprüche,
wobei das Schalldämmelement (80) einen hohlen Zentralbereich (82) aufweist,
wobei der Zentralbereich (82) insbesondere über eine Öffnung (84) des Schalldämmelements (80) strömungstechnisch mit dem Fluidkanal (60) verbunden ist.

7. Entlüftungssystem (1) gemäß einem der vorhergehenden Ansprüche,
wobei das Entlüftungssystem (1) ein Abdeckelement (90), insbesondere eine Abdeckhaube, aufweist,
wobei das Abdeckelement (90) den/die in der Dichtsektion (40) angeordneten Dichtring (100) oder Dichtringe (100), insbesondere radial, abdeckt.

8. Entlüftungssystem (1) gemäß Anspruch 7,
wobei das Abdeckelement (90), insbesondere reversibel, am Grundkörper (10), insbesondere mittels eines Gewindes, festgelegt ist und/oder
wobei zwischen Abdeckelement (90) und dem Grundkörper (10) ein Strömungsausgang (94), insbesondere ringförmig um die Längsrichtung (L), ausgebildet ist.

9. Radkappe umfassend ein Entlüftungssystem (1) gemäß einem der vorhergehenden Ansprüche.

10. Verwendung einer Radkappe gemäß Anspruch 9 oder eines Entlüftungssystems (1) gemäß einem der vorhergehenden Ansprüche 1 bis 8 in einem Nutzfahrzeug, insbesondere zur schallgedämmten Entlüftung.

## Claims

1. Venting system (1) comprising a base body (10) and a sealing ring (100) or a plurality of sealing rings (100),
wherein the base body (10) has a mounting section (20) and a sealing section (40),
wherein the base body (10) and/or the mounting section (20) and/or the sealing section (40) extend in a longitudinal direction (L),
wherein the base body (10) has a fluid channel (60) which extends from the mounting section (20) into the sealing section (40),
wherein the sealing ring (100) or the sealing rings (100) in the sealing section (40) is/are each held in a circumferential groove (42),
wherein the groove (42) or the grooves (42) are or can be brought into fluid connection with the fluid channel (60), in particular via breakthroughs (44), **characterized in that** a sound-absorbing element (80) is arranged within the fluid channel (60).

2. Venting system (1) according to claim 1,
wherein the groove (42) or the grooves (42) have a rounded side wall or a rounded groove base.

3. Venting system (1) according to any of the preceding claims,
wherein the mounting section (20) has a thread (22), in particular a self-sealing thread,
wherein the thread is arranged around and/or along the longitudinal direction.

4. Venting system (1) according to any of the preceding claims,
wherein the sealing section (40) has an outer cylindrical or polygonal section, wherein the grooves (42) are provided in this section, in particular in the direction of a radial direction (R) and/or in the longitudinal direction.

5. Venting system (1) according to any of the preceding claims,
wherein the sound-absorbing element (80) is formed from a foam material.

6. Venting system (1) according to any of the preceding claims,
wherein the sound-absorbing element (80) has a hollow central area (82), wherein the central area (82) is fluidically connected to the fluid channel (60), in particular via an opening (84) of the sound-absorbing element (80).

7. Venting system (1) according to any of the preceding claims,
wherein the venting system (1) has a cover element (90), in particular a cover hood,
wherein the cover element (90) covers the sealing ring (100) or sealing rings (100) arranged in the sealing section (40), in particular radially.

8. Venting system (1) according to claim 7,
wherein the cover element (90) is fixed, in particular reversibly, to the base body (10), in particular by means of a thread, and/or
wherein a flow outlet (94), in particular annular around the longitudinal direction (L), is formed between the cover element (90) and the base body (10).

9. Hubcap comprising a venting system (1) according to any of the preceding claims.

10. Use of a hubcap according to claim 9 or of a venting system (1) according to any of the preceding claims 1 to 8 in a commercial vehicle, in particular for sound-absorbing venting.

## Revendications

1. Système de purge d'air (1) comprenant un corps de base (10) et une bague d'étanchéité (100) ou une pluralité de bagues d'étanchéité (100), dans lequel
le corps de base (10) comporte une section de montage (20) et une section d'étanchéité (40),
le corps de base (10) et/ou la section de montage (22) et/ou la section d'étanchéité (40) s'étend dans une direction longitudinale (L),
le corps de base (10) comporte un canal à fluide (60) qui s'étend de la section de montage (20) à la section d'étanchéité (40),
la bague d'étanchéité (100) ou les bagues d'étanchéité (100) est/sont maintenue(s) dans la section d'étanchéité (40) dans une rainure périphérique (42) respective,
la rainure (42) ou les rainures (42) sont ou peuvent être mises en communication fluidique avec le canal à fluide (60), en particulier par l'intermédiaire de passages (44),
**caractérisé en ce qu'**un élément d'insonorisation (80) est disposé à l'intérieur du canal à fluide (60).

2. Système de purge d'air (1) selon la revendication 1,
dans lequel la rainure (42) ou les rainures (42) présentent une paroi latérale arrondie ou un fond de rainure arrondi.

3. Système de purge d'air (1) selon l'une des revendications précédentes,
dans lequel la section de montage (20) présente un pas de vis (22), en particulier un pas de vis auto-étanchéifiant,
le pas de vis est disposé autour et/ou le long de la direction longitudinale.

4. Système de purge d'air (1) selon l'une des revendications précédentes,
dans lequel la section d'étanchéité (40) comprend une partie extérieure cylindrique ou polygonale,
les rainures (42) sont ménagées dans cette partie, en particulier dans le sens d'une direction radiale (R) et/ou dans la direction longitudinale.

5. Système de purge d'air (1) selon l'une des revendications précédentes, dans lequel l'élément d'insonorisation (80) est fabriqué en une mousse.

6. Système de purge d'air (1) selon l'une des revendications précédentes,
dans lequel l'élément d'insonorisation (80) comprend une zone centrale creuse (82),
la zone centrale (82) est en communication fluidique avec le canal à fluide (60), en particulier par l'intermédiaire d'une ouverture (84) de l'élément d'insonorisation (80).

7. Système de purge d'air (1) selon l'une des revendications précédentes,
dans lequel le système de purge d'air (1) comporte un élément de recouvrement (90), en particulier un capot de recouvrement,
l'élément de recouvrement (90) recouvre, en particulier radialement, la bague d'étanchéité (100) ou les bagues d'étanchéité (100) disposées dans la section d'étanchéité (40).

8. Système de purge d'air (1) selon la revendication 7,
dans lequel l'élément de recouvrement (90) est fixé, en particulier de manière réversible, au corps de base (10), en particulier au moyen d'un pas de vis, et/ou
une sortie d'écoulement (94), en particulier de forme annulaire autour de la direction longitudinale (L), est formée entre l'élément de recouvrement (90) et le corps de base (10).

9. Enjoliveur comprenant un système de purge d'air (1) selon l'une des revendications précédentes.

10. Utilisation d'un enjoliveur selon la revendication 9 ou d'un système de purge d'air (1) selon l'une des revendications précédentes 1 à 8 dans un véhicule utilitaire, en particulier pour une purge d'air insonorisée.
